# EUROPÄISCHE PATENTSCHRIFT

(11) **EP 2 393 636 B1**
(45) Veröffentlichungstag und Bekanntmachung des Hinweises auf die Patenterteilung: **26.12.2012**
(21) Anmeldenummer: 09760088.6
(22) Anmeldetag: 29.10.2009
(51) Int. Cl.: B25J 9/00, B25J 19/02, B22D 11/14

(54) **INDUSTRIEROBOTER MIT SENSORISCHER ASSISTENZ**
SENSOR ASSISTED INDUSTRIAL ROBOT
ROBOT INDUSTRIEL DOTÉ D'UNE ASSISTANCE PAR ORGANES SENSORIELS

(30) Priorität: 04.02.2009 DE 102009007540; 04.02.2009 DE 102009007541
(43) Veröffentlichungstag der Anmeldung: 14.12.2011
(73) Patentinhaber: SMS Siemag AG, 40237 Düsseldorf (DE)
(72) Erfinder: PLOCIENNIK, Christian, 40878 Ratingen (DE); SCHÖCK, Hans-Wilhelm, 47239 Duisburg (DE); MOORS, Mark, 40235 Düsseldorf (DE)
(74) Vertreter: Klüppel, Walter
(86) Internationale Anmeldenummer: PCT/EP2009/007767
(87) Internationale Veröffentlichungsnummer: WO 2010/088935

(56) Entgegenhaltungen:
- DE-B3-102004 005 574
- JP-A- 3 071 959
- JP-A- 2008 279 549
- TAKAHAMA T ET AL: "Motion planning for dual-arm mobile manipulator - realization of tidying a room motion" ROBOTICS AND AUTOMATION, 2004. PROCEEDINGS. ICRA '04. 2004 IEEE INTERN ATIONAL CONFERENCE ON NEW ORLEANS, LA, USA APRIL 26-MAY 1, 2004, PISCATAWAY, NJ, USA,IEEE, US, Bd. 5, 26. April 2004 (2004-04-26), Seiten 4338-4343, XP010768077 ISBN: 978-0-7803-8232-9

## Beschreibung

Die Erfindung richtet sich auf ein Verfahren zum Betreiben eines Industrieroboters, welcher mindestens einen Arbeitsroboter, insbesondere mit einem ersten Manipulationsarm oder mit einem Manipulator, und mindestens einen damit fest gekoppelten eine detektierende Vorrichtung aufweisenden Assistenzroboter und/oder zweiten Manipulationsarm umfasst, wobei die detektierende Vorrichtung dem Industrieroboter zugeordnet ist und den Arbeitsbereich des Industrieroboters erfasst und/oder erkennend detektiert.

In verschiedenen industriellen Produktionsbereichen oder Fertigungsbereichen finden Industrieroboter Anwendung. Auch im Bereich hüttenmännischer Anlagen, wozu beispielsweise Stahlwerke und Stranggießanlagen zählen, werden Industrieroboter eingesetzt, um in den dortigen Gefahrenbereichen, die insbesondere durch Hitze und Staubentwicklung gekennzeichnet sind, Arbeitstätigkeiten zu verrichten und damit menschliche Arbeitskräfte zu entlasten oder zu ersetzen.

Die Druckschrift DE 10 2004 005 574 beschreibt ein Robotersystem, das ein oder mehrere Werkzeuge, eine Kamera und eine Lichtquelle umfasst, um Manipulationen an einem Werkstück vorzunehmen, wobei die Kamera und die Lichtquelle gegeneinander beweglich sind.

Hierbei ist es aus der Praxis bekannt einem solchen Industrieroboter oder Manipulator, eine dessen Arbeitsbereich erkennende und detektierende Vorrichtung zuzuordnen. Diese detektierende Vorrichtung, beispielsweise eine oder mehrere Kameras, sind dann unabhängig von dem Industrieroboter im Bereich oder der Umgebung des Industrieroboters derart angeordnet, dass mit ihnen der Arbeitsbereich des Roboters beobachtet werden kann. Nachteilig bei dieser Konstruktion ist es, dass je nach Stellung des Roboters oder dessen Arbeitsarms der genaue Ort der aktuellen Manipulationstätigkeit des Industrieroboters nicht beobachtet und erkannt werden kann, beispielsweise weil der Roboter oder der Roboterarm im Blickfeld der Kameras derart positioniert ist, dass durch ihn der Ort der eigentlichen Manipulationstätigkeit verdeckt wird.

Denselben Nachteil weist eine an einem mit einem Manipulationswerkzeug versehenen Arbeitsarm eines Roboters angeordnete detektierende Vorrichtung auf. Auch in diesem Falle ist nicht in jeder Handhabungsposition und Stellung des Arbeitsarms des Industrieroboters sichergestellt, dass die detektierende Vorrichtung den eigentlichen Ort der unmittelbaren Manipulation vollständig ohne Verdeckung durch den Arbeitsarm erfasst. Hinzu kommt bei dieser Ausführungsform, dass bei Tätigkeiten im Heiß- oder Gefahrenbereich der Arbeitsarm die detektierende Vorrichtung bei der Durchführung seiner Tätigkeit unmittelbar in den Heiß- und/oder Gefahrenbereich hinein bewegt. Dies erfordert, dass die detektierende Vorrichtung besonders robust und widerstandsfähig ausgebildet ist.

Der Erfindung liegt die Aufgabe zugrunde, ein Verfahren zum Betreiben eines Industrieroboters mit einer detektierenden Vorrichtung dahingehend weiterzubilden, dass der Industrieroboter insgesamt flexibler einsetzbar ist.

Bei einem Industrieroboter der eingangs näher bezeichneten Art wird diese Aufgabe erfindungsgemäß dadurch gelöst, dass der Arbeitsroboter und der Assistenzroboter oder der zweite Manipulationsarm mit der detektierenden Vorrichtung in einer hüttenmännischen Anlage betrieben und automatisch gesteuert werden und die detektierende Vorrichtung nur dann in eine gefährliche oder belastende Position gesteuert wird, wenn dies für die unmittelbare Durchführung der Arbeitstätigkeit des Industrieroboters notwendig ist. Eine besonders zweckmäßige Verwendung für einen erfindungsgemäß ausgestalteten Industrieroboter ergibt sich im Bereich hüttenmännischer Anlagen, da dort die Ansprüche an die Erkennbarkeit des Ortes der eigentliche Manipulations- oder Arbeitstätigkeit des Industrieroboters einerseits wichtig, aufgrund der dort herrschenden Umweltbedingungen aber andererseits auch schwierig zu erfüllen sind, wenn lediglich statisch angeordnete detektierende Vorrichtungen vorhanden sind. Die Erfindung zeichnet sich daher schließlich auch dadurch aus, dass der Arbeitsroboter und der Assistenzroboter einer hüttenmännischen Anlage zugeordnet sind. Hierbei werden unter "hüttenmännischer" Anlage alle Arten von Produktionsanlagen in einem Hütten-, Stahl- oder Walzwerk, insbesondere Stahlwerke, Elektrolichtbogenöfen, Stranggießanlagen, Kalt- und Warmwalzwerke, Bandanlagen oder ähnliche verstanden.

Die detektierende Vorrichtung zusammen mit dem Roboter bildet eine bauliche Einheit, so dass sie sich beispielsweise nur gemeinsam von einem Ort fort oder zu einem Ort hin bewegen können oder ohne Demontage nur gemeinsam bewegt und transportiert werden können. Hierbei bleibt es dann aber dennoch möglich, dass die detektierende Vorrichtung relativ zum Industrieroboter bewegt werden kann. Nur ihre vollständige Entfernung oder Beseitigung vom Industrieroboter ist ohne Demontage nicht möglich. Unter "Industrieroboter" werden übliche frei programmierbare Mehrachs-Industrieroboter verstanden, die üblicherweise über oder um sechs Achsen bewegbar sind. Aber auch Industrieroboter mit einem Modus "Maniputatorbetrieb" oder "Maniputatoren" oder "Telemanipulatoren" oder "Teleoperatoren" werden unter den Begriff "Industrieroboter" zusammengefasst. Unter Industrieroboter mit Manipulatorbetrieb oder Manipulatoren oder Telemanipulatoren oder Teleoperatoren werden dabei solche ferngesteuerte Vorrichtungen/Einrichtungen oder Manipulatoren verstanden, die von einem menschlichen Operateur befehligt oder betätigt werden, der sich entfernt und in der Regel ohne unmittelbaren eigenen Einblick in den Handhabungsort befindet und dort tätig wird. Der Operateur erhält eine indirekte Einsicht in den eigentlichen Handhabungsort dadurch, dass dem Telemanipulator, insbesondere optische, Mittel zugeordnet sind, mittels welcher der Handhabungsort detektiert und Signale auf eine Einrichtung, beispielsweise einen Monitor, übermittelt werden, auf welchem sich dem Operateur dann der Handhabungsort sichtbar, insbesondere in Form eines Fernsehbildes, darstellt.

"Detektierende Vorrichtung" ist eine solche, die mittels Sensor oder Sensoren oder Bilderfassungsvorrichtungen, wie beispielsweise Kameras, die Möglichkeit eröffnen, die Umgebung des Industrieroboters analog oder digital, virtuell und/oder visuell zu erfassen und/oder abzubilden.

Zweckmäßigerweise ist hierbei gemäß Ausgestaltung der Erfindung vorgesehen, dass der Arbeitsroboter und der Assistenzroboter oder der zweite Manipulationsarm, insbesondere gemeinsam, ohne Relativbewegung zueinander, verfahrbar ausgebildet sind. Insbesondere ist es hierbei auch möglich, den Industrieroboter insgesamt oder die beiden miteinander gekoppelten Komponenten Arbeitsroboter und Assistenzroboter verfahrbar, beispielsweise längs eines in einer Fertigungs- oder Produktionshalle angeordneten Fahrweges oder einer Fahrbahn auszugestalten. Die Erfindung sieht daher in weiterer Ausgestaltung vor, dass der Arbeitsroboter und der Assistenzroboter oder der zweite Manipulationsarm verfahrbar, insbesondere gemeinsam, ohne Relativbewegung zueinander, verfahrbar ausgebildet sind.

Hierbei besteht eine weitere vorteilhafte Ausgestaltung der Erfindung darin, dass der Arbeitsroboter und der Assistenzroboter oder der zweite Manipulationsarm über eine gemeinsame Steuerung angesprochen werden. Dadurch, dass die beiden Systemkomponenten Arbeitsroboter und detektierende Vorrichtung einem gemeinsamen Koordinatensystem zugeordnet sind, ist es möglich, die von der detektierenden Vorrichtung aufgenommenen Sensorsignale hinsichtlich einer Orts- und Lagebestimmung aufgrund der Identität des Koordinatensystems beider Systemkomponenten direkt auf das Koordinatensystem des Industrieroboters zu übertragen. Dies macht es dann nicht nur möglich, dass der Arbeitsroboter und der Assistenzroboter automatisch steuerbar oder gesteuert sind, was die Erfindung ebenfalls vorsieht, sondern dass darüber hinaus entsprechend einer weiteren Ausgestaltung der Erfindung der Arbeitsroboter und der Assistenzroboter oder der zweite Manipulationsarm über eine gemeinsame Steuerung ansprechbar sind oder angesprochen werden.

Das besondere Konzept der vorliegenden Erfindung besteht somit in einer Kombination aus einem oder mehreren, vorzugsweise automatisch gesteuerten, Industrierobotern oder Manipulatoren mit einem, ebenfalls vorzugsweise automatisch gesteuerten, weiteren Roboter, dem Assistenzroboter, oder einem zweiten Manipulationsarm. Dieser zweite Manipulationsarm oder Assistenzroboter weist dann die den Arbeitsbereich des Industrieroboters erfassend und/oder erkennend detektierende Vorrichtung, insbesondere mindestens einen Sensor, auf, der an dem Assistenzroboter oder dem zweiten Manipulationsarm, zumindest aufgrund der Beweglichkeit des zugeordneten Roboter- oder Manipulationsarms, beweglich angeordnet ist. Hierdurch wird ein Detektions-, Erkennungs- oder Sensorsystem dem Arbeitsroboter oder einem Arbeitsmanipulationsarm des Industrieroboters beigestellt und beigeordnet, das aufgrund seiner detektierenden und sensorischen Erfassungsmöglichkeiten eine sensorische Assistenz für den eigentlichen Manipulationsvorgang bereitstellt. Die detektierende Vorrichtung stellt einen integralen Bestandteil des Industrieroboters dar und stellt gleichzeitig eine sensorische Assistenz für die vom Industrieroboter in seinem Arbeitsbereich jeweils durchzuführende Arbeitstätigkeit zur Verfügung.

Der besondere Vorteil des erfindungsgemäßen Industrieroboters besteht darin, dass nun die Möglichkeit gegeben ist, bei jeder möglichen Stellung und Position des Industrieroboters und/oder seines ersten Manipulationsarms oder Manipulationswerkzeugs den von diesem zu bearbeitenden Arbeitstätigkeitsbereich mit Hilfe der detektierenden Vorrichtung zu detektieren, zu erkennen, zu messen und/oder zu beobachten. Hierbei besteht die Möglichkeit, die Tätigkeit des Industrieroboters von einem variablen, bewegbaren Punkt in direkter Nähe zum Ort der Manipulationstätigkeit aus zu messen, zu detektieren, zu erkennen und/oder zu beobachten. Dies insbesondere dann, wenn die detektierende Vorrichtung an einem dem Arbeitsbereich des Industrieroboters zugewandten Ende einer Manipulationseinrichtung, insbesondere Arm eines Knickroboters, des Assistenzroboters und/oder des zweiten Manipulationsarms angeordnet ist. Hierbei ist es dann weiterhin möglich, durch Rückkopplung über die Steuerung der detektierenden Vorrichtung und mittels eines die detektierende Vorrichtung umfassenden Sensorsystems die Qualität der Manipulationsaufgaben oder Arbeitstätigkeiten des Industrieroboters zu verbessern und neue und zusätzliche Arbeitstätigkeiten zu ermöglichen.

Der Vorteil eines solchen Industrieroboters liegt darin, dass dieser eine Vielzahl von verschiedenen Aufgaben an unterschiedlichen Einsatzorten wahrnehmen kann. Während die bisher üblichen statisch, fest angeordneten detektierenden Vorrichtungen oder Sensoren immer nur einen festgelegten und fest eingestellten Bereich beobachten können, ist es erfindungsgemäß möglich, dass die detektierende Vorrichtung mit dem Industrieroboter zusammen bewegt wird. Dies wird durch die Ausbildung der detektierenden Vorrichtung als dessen fest gekoppelter und/oder integraler Bestandteil ermöglicht, wobei vorzugsweise ein Arbeitsroboter fest mit einem Assistenzroboter gekoppelt ist. Ein weiterer Vorteil besteht darin, dass im Unterschied zu bei außerhalb des Industrieroboters fest installierten detektierenden Vorrichtungen, die in gefährdeten Bereichen permanent dem Gefährdungspotenzial ausgesetzt sind, bei dem mit einem erfindungsgemäßen Industrieroboter ausgestatteten, beweglichen und dynamischen Gesamtsystem, d. h. insbesondere der dynamisch angeordneten detektierenden Vorrichtung, es möglich ist, dass diese sich nur dann innerhalb einer gefährlichen oder belastenden Position befinden muss, wenn dies für die unmittelbare Durchführung einer Arbeitstätigkeit des Industrieroboters notwendig ist. Im Übrigen kann die Position der detektierenden Vorrichtung dynamisch und veränderbar an die jeweilige vom Industrieroboter durchzuführende Manipulationsaufgabe angepasst werden, wodurch der Industrieroboter insgesamt flexibler einsetzbar und somit ein flexibilisiertes Gesamtsystem geschaffen ist.

Die detektierende Vorrichtung oder ein mittels der detektierenden Vorrichtung gebildetes Sensorsystem umfasst mindestens einen Sensor oder mindestens eine Kamera, so dass die Erfindung weiterhin vorsieht, dass die detektierende Vorrichtung einen Sensorkopf umfasst, der mindestens einen Sensor oder eine Kamera aufweist. Der Sensorkopf befindet sich vorteilhafterweise an einem dem Arbeitsbereich des Industrieroboters zugewandten Ende des zweiten Manipulationsarms des Industrieroboters oder eines Arms des Assistenzroboters. Wenn mehr als ein Sensor in dem Sensorkopf oder an dem Industrieroboter angeordnet sind, können diese beispielsweise einen Laserscanner oder Kameras verschiedener Bauart ausbilden oder umfassen. Der Vorteil besteht dann nicht nur darin, mit dem erfindungsgemäßen Roboter einen großen Freiheitsgrad hinsichtlich der Wahl der Anordnung möglicher Beobachtungspunkte im Raum zu haben und diese präzise, kontrolliert, zeitgesteuert und damit variabel um verschiedene Achsen drehen zu können und dadurch zu positionieren. Dies eröffnet zudem die Möglichkeit einer qualitativen Erweiterung der Detektionsmöglichkeiten der detektierenden Vorrichtung. So können mit zweidimensionalen Laserscannem dreidimensionale Abtastungen des Arbeitsbereichs und damit gegebenenfalls auch eines zu bearbeitenden Werkstückes durchgeführt werden. Oder, mit Hilfe von Kameras können Tiefeninformationen aus Bildern, die von verschiedenen Positionen aufgenommen werden, extrahiert werden.

Dadurch, dass die detektierende Vorrichtung integraler Bestandteil des Industrieroboters ist oder der Arbeitsroboter fest mit dem Assistenzroboter gekoppelt ist, bewegen sich beide Systemkomponenten, d. h. die Arbeitskomponente, insbesondere der Arbeitsroboter, und die Detektionskomponente, d. h. insbesondere der Assistenzroboter, gemeinsam und bezüglich ihrer jeweiligen Basis ohne Relativbewegung zueinander, so dass für beide Systemkomponenten ein gemeinsames Koordinatensystem festgelegt ist. Um dies auch bei zwei zunächst separaten Robotern zu realisieren, zeichnet sich die Erfindung weiterhin dadurch aus, dass der Arbeitsroboter und der Assistenzroboter oder der zweite Manipulationsarm bezüglich ihrer Basis starr miteinander gekoppelte Knickarmroboter sind.

Schließlich sieht die Erfindung in Weiterbildung der Erfindung auch noch vor, dass der Arbeitsroboter und der Assistenzroboter Bestandteil eines verfahrbar ausgebildeten Portalkranroboters oder Brückenkranroboters sind.

Schließlich zeichnet sich die Erfindung auch noch dadurch aus, dass der Arbeitsroboter und der Assistenzroboter Bestandteil eines verfahrbaren Portalkranroboters sind.

Die Erfindung ist nachstehend anhand der Zeichnung beispielhaft näher erläutert. Diese zeigt in
- Fig. 1: in schematischer Darstellung einen erfindungsgemäßen Industrieroboter und in
- Fig. 2: in schematischer Darstellung einen Einsatzbereich eines Portalkranroboters oder Brückenkranroboters.

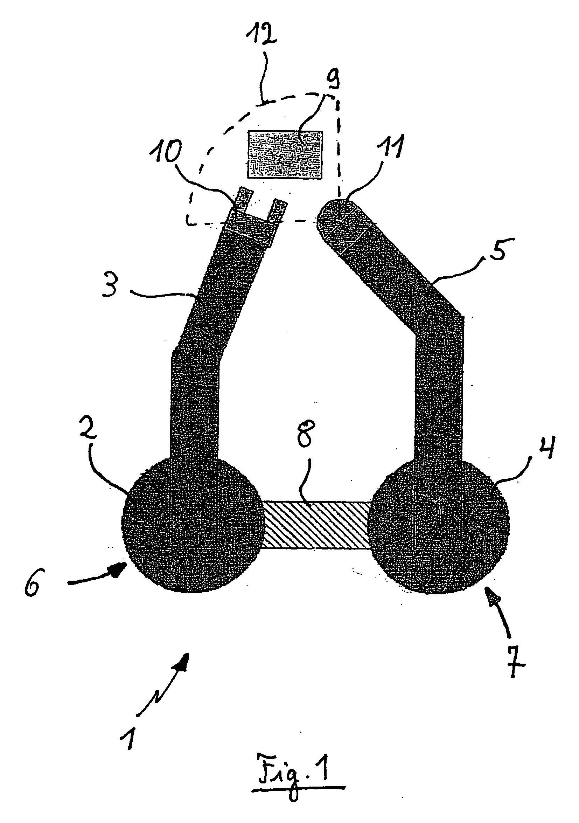

Der in Figur 1 schematisch dargestellte und insgesamt mit 1 bezeichnete Industrieroboter umfasst einen Arbeitsroboter 2 mit einem ersten Manipulationsarm 3 und einen Assistenzroboter 4 mit einem zweiten Manipulationsarm 5. Die jeweilige Basis 6, 7 vom Arbeitsroboter 2 und Assistenzroboter 4 und damit diese beiden Roboter insgesamt, sind mittels einer starren Verbindung 8 fest miteinander gekoppelt. Im Arbeitsbereich des Industrieroboters 1 ist ein Objekt 9 angeordnet, an welchem der als Knickarmroboter ausgebildete Arbeitsroboter 2 mit Hilfe eines an der dem Arbeitsbereich zugewandten Ende des ersten Manipulationsarms 3 in Form eines Greifers 10 angeordneten Werkzeugs eine Veränderung oder eine Positionsänderung vornehmen soll. Hierzu bewegt der Assistenzroboter 4 den ihm zugeordneten zweiten Manipulationsarm 5, an dessen dem Arbeitsbereich des Industrieroboters 1 und damit dem Objekt 9 zugewandten Ende eine detektierende Vorrichtung 11 in Form eines Sensorkopfes angeordnet ist, derart in die Nähe des Objektes 9, dass in von dem von der detektierenden Vorrichtung 11 ausgehenden Erfassungsbereich, beispielsweise Sensorkegel, sowohl das Objekt 9 als auch der Greifer 10 erfasst sind. Der Erfassungsbereich ist schematisch durch gestrichelte Linie 12 dargestellt. Da sowohl der Assistenzroboter 4 als auch der Arbeitsroboter 2 über die starre Verbindung 8 fest miteinander gekoppelt sind, bewegen sie sich als eine den Industrieroboter 1 ausbildende Einheit. Insbesondere ist durch ihre jeweilige Basis 6, 7 die Position beider Roboter in einem gemeinsamen Koordinatensystem festgelegt. Dies ermöglicht es, dass die mit Hilfe der detektierenden Vorrichtung 11 vorgenommenen Ortsbestimmungen bezüglich des Objektes 9 von dem der dem Assistenzroboter 4 zugeordneten Steuerung zugrunde liegenden Koordinatensystem unmittelbar auf das der Steuerung des Arbeitsroboters 2 zugrunde liegende Koordinatensystem übertragen oder projiziert werden können. Insbesondere ermöglicht dies auch die Ausbildung einer gemeinsamen Steuerung von Arbeitsroboter 2 und Assistenzroboter 4.

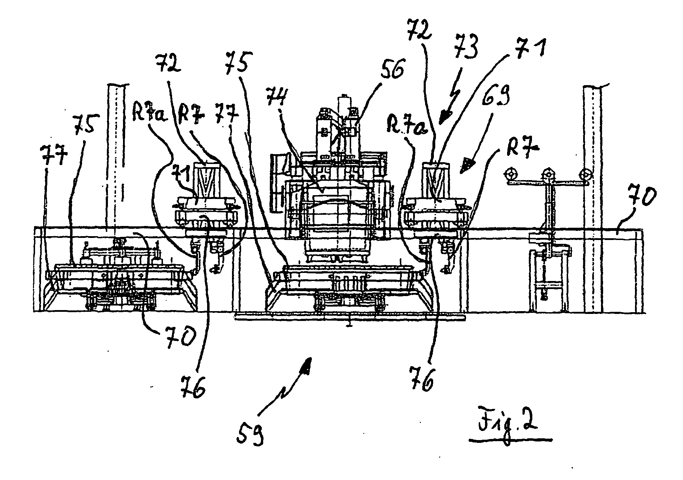

Wie der Figur 2 zu entnehmen ist, kann beispielsweise ein einer Stranggießanlage oder Gießmaschine 73 zugeordneter Arbeitsroboter 2 oder Gießroboter R7 verfahrbar ausgebildet sein, wobei dieser vorzugsweise als Portalkranroboter oder Brückenkranroboter 69 ausgebildet ist, der einerseits längs einer Kranbahn 70 verfahrbar ist, darüber hinaus aber auch einen laufkatzenartig, quer zur Kranlaufbahn 70 verfahrbaren Teil 71 und einen daran insbesondere teleskopartig ausfahrbaren Teleskopteil 72 aufweist, an dessen Ende der eigentliche Roboter R7 mit Robotertätigkeitsarm angeordnet und ausgebildet ist.

Die Figur 2 zeigt in schematischer Seitenansicht einen Pfannendrehturm 56 mit daran angeordneten Stahlgießpfannen 74. Auf der Gießbühne 59 ist der einer Verteilerrinne 75 zugeordnete Gießroboter R7 in Form eines Portalkranroboters oder Brückenkranroboters 69 angeordnet. Der Gießroboter R7 ist an dem teleskopartig ausfahrbaren Teleskoparm 72 angeordnet, der mittels des laufkatzenartig ausgebildeten Kranteils 71 quer zu der Kranbahn 70 verfahrbar ist, längs welcher Kranbahn 70 der Gießroboter R7 mittels eines Trägers 76 verfahrbar ist.

Der Figur 2 ist zu entnehmen, dass der Gießroboter R7 mit einem Sensor- oder Assistenzroboter R7a durch deren gemeinsame Anordnung an dem Teleskoparm 72 fest gekoppelt ist. Der Assistenzroboter R7a ermöglicht es, den Ort und den Bereich der Arbeitstätigkeit des Gießroboters R7 exakt zu detektieren und gegebenenfalls für das Bedienpersonal erkennbar visualisiert auf einem Bildschirm darzustellen. Der auf einem Verteilerrinnenwagen 77 angeordneten Verteilerrinne 75 ist also neben dem Gießroboter R7 der Sensor- oder Assistenzroboter R7a zugeordnet. Ferner sind auf der Kranlaufbahn 70 zwei Brückenkranroboter oder Portalkranroboter 69 angeordnet, die unabhängig voneinander verfahrbar sind.

Eine weitere, nicht näher dargestellte typische Anwendung des erfindungsgemäßen Roboters im Bereich hüttenmännischer Anlagen erfolgt bei der Reparatur von Paneelleckagen in einem Elektrolichtbogenofen. An Elektrolichtbogenöfen treten regelmäßig Beschädigungen an den Kupferpaneelen auf, die in die Ofenwände integriert sind. Da aus diesen Paneelen austretendes Wasser für den Prozess eines solchen Ofens erhebliche Gefahren mit sich bringt, muss eine solche Leckage, nachdem sie erkannt wurde, schnellstmöglich repariert werden, was in der Regel durch Schweißen geschieht. Tritt eine größere Leckage während des Einschmelzprozesses auf, muss die Reparatur über einem teilflüssigen Stahlbad durchgeführt werden, was für Menschen eine enorme körperliche Belastung darstellt und darüber hinaus auch mit einer großen Gefahr verbunden ist. In diesem Falle kann in diesem Heiß- und/oder Gefahrenbereich mit einem erfindungsgemäßen Industrieroboter gearbeitet werden. Mit dem Assistenzroboter und/oder dem zweiten Manipulationsarm kann in einem solchen Falle aufgabengerecht der Schweißbereich beobachtet werden, während mit dem Arbeitsroboter oder dem ersten Manipulationsarm oder Manipulator die eigentliche Schweißarbeit durchgeführt wird. Eine solche Tätigkeit ist mit üblichen, sensorlosen Schweißrobotem nicht möglich, da mit diesen die Art der Leckage nicht festgestellt und damit der zur Reparatur notwendige geeignete Schweißvorgang nicht festgelegt werden kann. Ein Industrieroboter mit zugeordneten, im oder am Arbeitsbereich des Roboters angeordneten Sensoren oder aber auch am eigentlichen Arbeitsarm angeordneten Sensoren ist für derartige Tätigkeiten ebenfalls nicht geeignet, da die Sensoren entweder zu weit weg vom Schweißbereich oder aber bei ihrer Anordnung am Arbeitsarm zu nah am Schweißbereich beziehungsweise zu nah im unmittelbaren Heißbereich angeordnet sind. Mit Hilfe des am erfindungsgemäßen Industrieroboter angeordneten Detektionselementes beziehungsweise der detektierenden Vorrichtung lässt sich der Lichtbogen-Überschlag auf das zu schweißende Wandelement beobachten. Außerdem ist es möglich, hier die Art der mechanischen Beschädigung mit Hilfe des erfindungsgemäßen Industrieroboters im Vorfeld zu prüfen. Insbesondere dann, wenn der Industrieroboter Bestandteil eines verfahrbaren Portalkranroboters oder Brückenkranroboters ist, ist es möglich, diesen unmittelbar in den noch ein Schmelzbad, das gegebenenfalls mittels kleinstückigen Schrotts teilweise abgedeckt ist, aufweisenden Elektrolichtbogenschmelzofen hineinzufahren. Es ist aber auch möglich, an einem Hallenkran eine Gondel anzuordnen, mittels welcher der erfindungsgemäße Industrieroboter dann in den Elektrolichtbogenofen abgesenkt wird.

## Patentansprüche

1. Verfahren zum Betreiben eines Industrieroboters (1, 69), welcher mindestens einen Arbeitsroboter (2, R7), insbesondere mit einem ersten Manipulationsarm (3) oder mit einem Manipulator, und mindestens einen damit fest gekoppelten eine detektierende Vorrichtung (11) aufweisenden Assistenzroboter (4, R7a) und/oder zweiten Manipulationsarm (5) umfasst,
wobei die detektierende Vorrichtung (11) dem Industrieroboter (1, 69) zugeordnet ist und den Arbeitsbereich des Industrieroboters (1, 69) erfasst und/oder erkennend detektiert,
**dadurch gekennzeichnet, dass**
der Arbeitsroboter und der Assistenzroboter (4, R7a) oder der zweite Manipulationsarm (5) mit der detektierenden Vorrichtung in einer hüttenmännischen Anlage betrieben und automatisch gesteuert werden; und
die detektierende Vorrichtung (11) nur dann in eine gefährliche oder belastende Position gesteuert wird, wenn dies für die unmittelbare Durchführung der Arbeitstätigkeit des Industrieroboters notwendig ist.

2. Verfahren nach Anspruch 1, **dadurch gekennzeichnet, dass** der Arbeitsroboter (2, R7) und der Assistenzroboter (4, R7a) oder der zweite Manipulationsarm (5), insbesondere gemeinsam, ohne Relativbewegung zueinander, verfahrbar ausgebildet sind.

3. Verfahren nach einem der vorhergehenden Ansprüche, **dadurch gekennzeichnet, dass** der Arbeitsroboter (2, R7) und der Assistenzroboter (4, R7a) oder der zweite Manipulationsarm (5) über eine gemeinsame Steuerdung angesprochen werden.

## Claims

1. Method of operating an industrial robot (1, 69), which comprises at least one work robot (2, R7), particularly with a first manipulation arm (3) or with an manipulator, and at least one assist robot (4, R7a) and/or second manipulation arm (5), which is or are fixedly coupled therewith and comprises or comprise a detecting device (11), wherein the detecting device (11) is associated with the industrial robot (1, 69) and detects and/or detects by recognition the working range of the industrial robot (1, 69), **characterised in that** the work robot and the assist robot (4, R7a) or the second manipulation arm (5) with the detecting device operate and are automatically controlled in a metallurgical pliant with operatives, and the detecting device (11) is controlled in a risky or taxing position when this necessary for direct performance of the work activity of the industrial robot.

2. Method according to claim 1, **characterised in that** the work robot (2, R7) and the assist robot (4, R7a) or the second manipulation arm (5) are constructed to be movable, particularly in common, without movement relative to one another.

3. Method according to one of the preceding claims, **characterised in that** the work robot (2, R7) and the assist robot (4, R7a) or the second manipulation arm (5) are addressed by way of a common control.

## Revendications

1. Procédé pour le fonctionnement d'un robot industriel (1, 69) qui comprend au moins un robot de travail (2, R7), en particulier avec un premier bras de manipulation (3) ou avec un manipulateur, et au moins un robot d'assistance (4, R7a) et/ou un second bras de manipulation (5) qui comprend un dispositif détecteur (11) couplé fermement au robot de travail,
dans lequel le dispositif détecteur (11) est associé au robot industriel (1, 69) et percevoit la zone de travail du robot industriel (1, 69) et/ou détecte celle-ci par reconnaissance,
**caractérisé en ce que**
le robot de travail et le robot d'assistance (4, R7a) ou le second bras de manipulation (5) avec le dispositif détecteur sont amenés à fonctionner dans une installation de sidérurgie et sont commandés automatiquement ; et
le dispositif détecteur (11) est commandé vers une position dangereuse ou chargée uniquement lorsque ceci est nécessaire pour l'exécution immédiate de l'activité de travail du robot industriel.

2. Procédé selon la revendication 1, **caractérisé en ce que** le robot de travail (2, R7) et le robot d'assistance (4, R7a) ou le second bras de manipulation (5) sont réalisés en particulier de manière à pouvoir être déplacés conjointement, sans mouvement relatif l'un par rapport à l'autre.

3. Procédé selon l'une des revendications précédentes, **caractérisé en ce que** le robot de travail (2, R7) et le robot d'assistance (4, R7a) ou le second bras de manipulation (5) sont adressés via une commande commune.
